# EUROPÄISCHE PATENTSCHRIFT

(11) **EP 2 188 575 B1**
(45) Veröffentlichungstag und Bekanntmachung des Hinweises auf die Patenterteilung: **07.10.2015**
(21) Anmeldenummer: 08786607.5
(22) Anmeldetag: 30.07.2008
(51) Int. Cl.: F24H 7/04, F28D 20/02

(54) **WARMWASSERGERÄT**
HOT-WATER APPLIANCE
APPAREIL À EAU CHAUDE

(30) Priorität: 14.08.2007 DE 102007038351
(43) Veröffentlichungstag der Anmeldung: 26.05.2010
(73) Patentinhaber: BSH Hausgeräte GmbH, 81739 München (DE)
(72) Erfinder: WINTERHALDER, Rolf, 89284 Pfaffenhofen (DE)
(86) Internationale Anmeldenummer: PCT/EP2008/059972
(87) Internationale Veröffentlichungsnummer: WO 2009/021841

(56) Entgegenhaltungen:
- EP-A- 0 013 569
- WO-A-2006/023860
- DE-A1- 10 102 250
- JP-A- 60 048 443
- US-A- 4 003 426
- US-A- 4 164 253

## Beschreibung

Die vorliegende Erfindung betrifft ein Warmwassergerät welches wenigstens einen Wasserbehälter, einen Wasserzulauf sowie einen Wasserablauf, ein Heizmittel sowie einen Metallkörper zur Wärmespeicherung umfasst, wobei dieser wenigstens ein Phasenübergangsmaterial umfasst.

Zur Wassererwärmung ist im Vergleich zur mechanischen Anwendung eine große Wärmemenge notwendig. Wird diese Energie aus dem öffentlichen Stromnetz entnommen, ist die Leistung durch die Anschlussbedingungen begrenzt. So wird beispielsweise bei Durchlauferhitzern für das Erwärmen einer Wassermenge von 12 Litern pro Minute eine Aufnahmeleistung von 21 KW benötigt. Im Wärmespeicher dauert die Erwärmung von 100 Litern bei einer Leistungsaufnahme von 2 KW 168 Minuten. Diese 100 Liter Wasser müssen dann vorgehalten werden, um jederzeit warmes Wasser in ausreichender Menge zur Verfügung zu haben. Diese Art der Speicherung benötigt auf der einen Seite ein großes Volumen für den Speicher und ist im Hinblick auf seine Energieeffizienz unbefriedigend. Um den Speicher zu verkleinern, muss ein Speichermedium gefunden werden, mit dem die im Wasser enthaltene Energie in einem kleineren Volumen gespeichert werden kann. Eine Methode um große Energiemengen zu speichern ist die Verwendung von Phasenübergangsmaterialien. Der Vorteil dieser Wärmespeichertechnik beruht darauf, dass in einem durch die Schmelztemperatur des eingesetzten Speichermaterials genau festgelegten Temperaturbereich eine große Wärmeenergie in einer verhältnismäßig kleinen Masse gespeichert werden kann. Die Nutzung eines Phasenübergangs ist dabei wesentlich effektiver als das bloße Erwärmen des Mediums. So wird beispielsweise beim Erstarren von Wasser der Phasenübergang vom flüssigen Wasser zum festen Eis, bei 0 °C also, ungefähr soviel Wärme frei, wie zum Erwärmen derselben Menge Wassers von 0 °C auf 80 °C benötigt wird. Die spezifische Phasenumwandlungsentalpie ist also im Vergleich zur spezifischen Wärmekapazität relativ hoch (für Wasser: Schmelzentalpie 334 KJ pro Kg, spezifische Wärmekapazität ca. 4,19 KJ * Kg⁻¹ * K⁻¹ ), wodurch die Energiedichte im Vergleich zu Heißwasserspeichern erheblich größer ist.

Warmwassergeräte, welche Phasenübergangsmaterialien zur Wärmespeicherung verwenden, sind im Stand der Technik bekannt. So beschreibt beispielsweise die DE 40 29 355 A1 einen Warmwasserschichtenspeicher mit einem Wasserreservoir und einem darin angeordneten Wärmetauscher mit Heißwasservorlauf und Heißwasserrücklauf sowie Brauchwasservorlauf und Brauchwasserrücklauf, wobei dieser Wasserspeicher Fixiersalzpackungen zur Erhöhung der potentiellen Speicherfähigkeit aufweist. Dieses im Stand der Technik verfügbare Warmwassergerät weist jedoch den Nachteil auf, dass dessen Fixiersalzpackungen nur eine stark eingeschränkte Wärmeleitfähigkeit aufweisen. Dies ist insbesondre im festen Zustand des Phasenübergangsmaterials problematisch, da im erstarrten Zustand die Zirkulation der Wärme eingeschränkt ist. Ist das Phasenübergangsmaterial in einem Hohlkörper eingeschlossen und setzt der Erstarrungsvorgang von außen ein, so kann die Wärme vom erstarrenden inneren Kern nur schwer nach außen dringen.

Weiter ist in der US 4 164 253 ein Behälter für heiße Fluide nach dem Oberbegriff des Anspruchs 1 offenbart.

Ausgehend von diesem Stand der Technik liegt der vorliegenden Erfindung die Aufgabe zugrunde, ein Warmwassergerät zur Verfügung zu stellen, das eine verbesserte Wärmeleitfähigkeit aufweist.

Diese Aufgabe wird für ein Warmwassergerät mit den Merkmalen gemäß Patentanspruch 1 gelöst. Vorteilhafte Aus- und Weiterbildungen der Erfindung, welche einzeln oder in Kombination miteinander eingesetzt werden können, sind Gegenstand der Unteransprüche.

Das erfindungsgemäße Warmwassergerät baut auf gattungsgemäßen Warmwassergeräten mit den Merkmalen des Kennzeichnenden Teils auf.

Dadurch wird eine gegenüber dem Stand der Technik deutlich verbesserte Wärmeleitfähigkeit erzielt. Beginnt das Phasenübergangsmaterial zu erstarren, so wird durch das Mittel zum Wärmetransport sichergestellt, dass auch dann, wenn äußere Schichten des Phasenübergangsmaterials bereits erstarrt sind, die durch das Erstarren der inneren Schichten des Phasenübergangsmaterials freigesetzte Wärme ungehindert nach außen dringen kann, so dass auch der Kern erstarren kann.

Von besonderem Vorteil ist es, wenn das Mittel zum Wärmetransport Graphit und/oder Kunststoffschaum umfasst. Diese Materialien sind in besonderer Weise geeignet, die während des Erstarrungsvorgangs im Kern freigesetzte Wärme nach außen zu transportieren, so dass auch der Kern, nachdem die Randbereiche beginnen zu erstarren, ebenfalls erstarren kann.

Als vorteilhaft hat es sich dabei erwiesen, wenn das Mittel zum Wärmetransport Kohlenstoffnanoröhren umfasst. Kohlenstoffnanoröhren, auch CNT (Carbon Nanotubes) genannt, sind mikroskopisch kleine röhrenförmige Gebilde (molekulare Nanoröhren) aus Kohlenstoff. Ihre Wände bestehen wie die der Fullerene oder wie die Ebenen des Graphits ausschließlich aus Kohlenstoff, wobei die Kohlenstoffatome eine wabenartige Struktur mit Sechsecken und jeweils drei Bindungspartnern einnehmen. Der Durchmesser der Röhren liegt maximal im Bereich von 1-50 Nanometern, aber es wurden auch Röhren mit 0,4 Nanometern Durchmesser hergestellt. Längen von mehren Millimetern für einzelne Röhren von bis zu 20 cm für Röhrenbündel wurden bereits erreicht. Man unterscheiden zwischen ein- und mehrwandigen, zwischen offen oder geschlossenen Röhren, mit einem Deckel, der einen Ausschnitt aus einer Fullerenstruktur hat, und zwischen leeren und gefüllten Röhren beispielsweise mit Silber, flüssigem Blei oder Edelgasen.

Von Vorteil ist es dabei auch, wenn das Phasenübergangsmaterial einen Schmelzpunkt zwischen 60 und 100 °C aufweist. Hierfür geeignete Phasenübergangsmaterialien umfassen Paraffine, Zuckeralkohole, Gashydrate, Wasser, wässrige Salzlösungen, Salzwassereutektika, Salzhydrate, Mischungen aus Salzhydraten, Salze und eutektische Mischungen von Salzen, Alkalimetallhydroxyde, Mischungen aus Salzen und Alkalihydroxyden, Fettsäuren, Oligomere, Kohle, Alkohole, Caprylsäure, Methylesther, Methylpalmitate, Methylstearate, Mischungen von kurzkettigen Säuren, Capryl- und/oder Laurylsäure, Kokosfettsäuren sowie Propane und/oder Methane. Besonders geeignet sind Salze die Lithium und/oder Natrium und/oder Kalium umfassen.

Für technische Anwendungen flüssig-kristalliner Latentwärmespeicher ist in der Regel eine Rekristallisation kurz unterhalb der Schmelztemperatur erwünscht. Dafür müssen dem Material geeignete Keimbildner zugesetzt werden, die eine Unterkühlung der Schmelze verhindern

Gemäss der Erfidung sind wenigstens zwei gegenüberliegende Wände des Metallkörpers elektrisch isoliert. Dadurch kann eine elektrische Spannung angelegt werden und durch den Stromfluss durch ein elektrisch leitfähiges Phasenübergangsmaterial und/oder durch das Mittel zum Wärmetransport hindurch das Element aufgeheizt werden. Dadurch ist in einfacher und ökonomischer Weise Heizung und Wärmespeicherung in einem Element vereinigt. Dadurch wird ein besonders vorteilhaftes Element zur Wassererwärmung zur Verfügung gestellt, welches Wärme sowohl erzeugen als auch zur schnellen Erwärmung größerer Mengen von Wasser speichern kann.

Als besonders günstig hat es sich erwiesen, wenn in einer bevorzugten Ausführungsform der Metallkörper zur Wärmespeicherung stabförmig ausgebildet ist.

Darüber hinaus ist es von Vorteil, wenn in einer bevorzugten Ausführungsform das Warmwassergerät ein Heizmittel aufweist.

Die vorliegende Erfindung lässt sich wie folgt zusammenfassen: zur Warmwassererwärmung ist im Vergleich zu mechanischen Anwendungen eine große Wärmemenge notwendig. Wird diese Energie aus dem öffentlichen Stromnetz entnommen, ist die Leistung durch die Anschlussbedingungen begrenzt. Bei Durchlauferhitzern ist für eine Wassermenge von 12L/min eine Aufnahmeleistung von 21 kW nötig. In einem Speicher dauert, bei einer Leistungsaufnahme von 2 kW, die Erwärmung von 100I Wasser 168 min. Diese 100I Wasser werden dann vorgehalten um jederzeit warmes Wasser in ausreichender Menge zur Verfügung zu haben. Um den Speicher zu verkleinern, muss ein Speichermedium gefunden werden, mit dem die im Wasser enthaltene Energie in einem kleinen Volumen gespeichert werden kann. Eine Methode um größere Energiemengen zu speichern sind Latentwärmespeicher mit einem Phasenübergangsmaterial (PCM - Phase Change Material). Ein Problem der Latentwärmespeicher ist der Wärmetransport. Denn das Material wird fest und hat dann nur eine begrenzte Wärmeleitfähigkeit, im Gegensatz zu Flüssigkeiten, die auch durch die Zirkulation Wärme transportieren können. Ist das Phasenübergangsmaterial in einem Hohlkörper eingeschlossen, setzt der Erstarrungsprozess von außen ein und die Wärme dringt nur sehr schlecht zum Kern vor. Um diesen Wärmetransport zu verbessern, werden wärmeleitende Stoffe als Wärmeleitungen im Phasenübergangsmaterial eingesetzt. Solche Kombinationen werden bei solartechnischen Anlagen angewandt, z.B in einer Kombination von Graphitmatrix und einer Salzlösung. Dabei kann die Vorrichtung aus einem Metallstab, der mit einem geschäumten Graphitmaterial und einer Salzlösung, deren Schmelzpunkt zwischen 60 und 100° liegt, gefüllt ist, bestehen. Um die Wärmeleitfähigkeit zu erhöhen können dem Graphitmaterial Kohlenstoffnanoröhren (Carbon Nanotubes) zügegeben werden. Alternativ kann anstelle des Graphits ein mit Kohlenstoffnanoröhren wärmeleitend gemachter Kunststoffschaum verwendet werden. Weiterhin können gegenüberliegende Wände isoliert werden. Dadurch kann eine elektrische Spannung angelegt werden und durch den Stromfluss durch den Graphit das Element aufgeheizt werden. Dadurch ist die Heizung und Wärmespeicherung in einem Element vereinigt. Durch ein geschäumtes Graphitmaterial ist der Wärmetransport aus dem PCM gewährleistet. Es lässt sich so kostengünstig ein Wärmespeicher herstellen. Durch die zusätzliche Ausführung als Heizung wird ein ideales Element zur Wassererwärmung zur Verfügung gestellt, welches Wärme sowohl erzeugen und zur schnellen Erwärmung größerer Mengen von Wasser auch speichern kann. Im Gegensatz zur Anwendung in solarthermischen Kraftwerken soll der Wärmespeicherstab in der Wassererwärmung für den Haushaltsbereich eingesetzt werden. Dazu wird er in den Wärmespeicher montiert. Beim Heizen des Wassers wird er aufgeladen, wenn kaltes Wasser einströmt, gibt er seine Wärme wieder ab.

Das erfindungsgemäße Warmwassergerät bietet ökonomische, Platz sparende und effiziente Möglichkeiten der Wassererwärmung und Wärmespeicherung.

Weitere Vorteile und Ausgestaltungen der Erfindung werden im Folgenden anhand verschiedener Ausführungsbeispiele, auf welche die vorliegende Erfindung jedoch nicht beschränkt ist, sowie unter Bezugnahme auf die beiliegenden Zeichnungen erläutert.

Darin zeigen schematisch:
- Fig. 1: Eine schematische Darstellung eines Warmwassergeräts;
- Fig. 2: eine perspektivische Darstellung eines Metallkörpers zur Wärmespeicherung;
- Fig. 3: eine Querschnittszeichnung eines Metallkörpers zur Wärmespeicherung; sowie
- Fig. 4: eine schematische Darstellung einer weiteren Ausführungsform des Warmwassergeräts.

Bei der nachfolgenden Beschreibung der bevorzugten Ausführungsformen der vorliegenden Erfindung bezeichnen gleiche Bezugszeichen gleiche oder vergleichbare Komponenten.

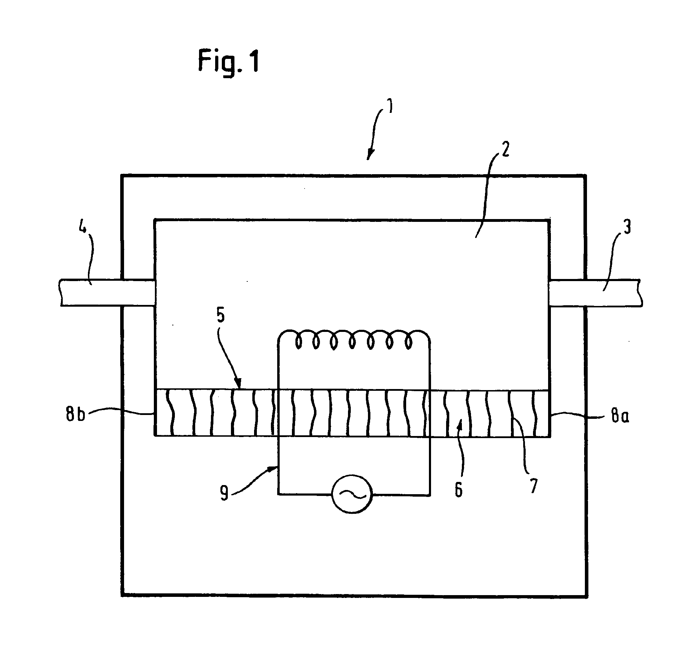

Fig. 1 zeigt in einer schematischen Darstellung ein Warmwassergerät 1. Dieses umfasst einen Wasserbehälter 2, einen Wasserzulauf 3, einen Wasserablauf 4 sowie einen Metallkörper zur Wärmespeicherung 5. Der Metallkörper zur Wärmespeicherung 5 umfasst ein Phasenübergangsmaterial 6, sowie wenigstens ein Mittel zum Wärmetransport 7, das Graphit und/oder Kunststoffschaum umfasst. Das Mittel zum Wärmetransport 7 umfasst zur Verbesserung der Wärmeleitfähigkeit Kohlenstoffnanoröhren. Darüber hinaus weist das Warmwassergerät 1 ein Heizelement 9 auf.

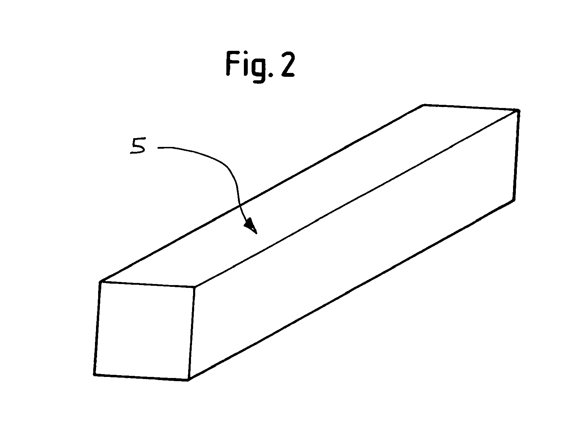

Fig. 2 zeigt in einer perspektivischen Darstellung eine stabförmige Ausführungsform eines Metallkörpers zur Wärmespeicherung 5. Eine solche stabförmige Ausführungsform lässt sich besonders raumsparend in einem Warmwassergerät unterbringen.

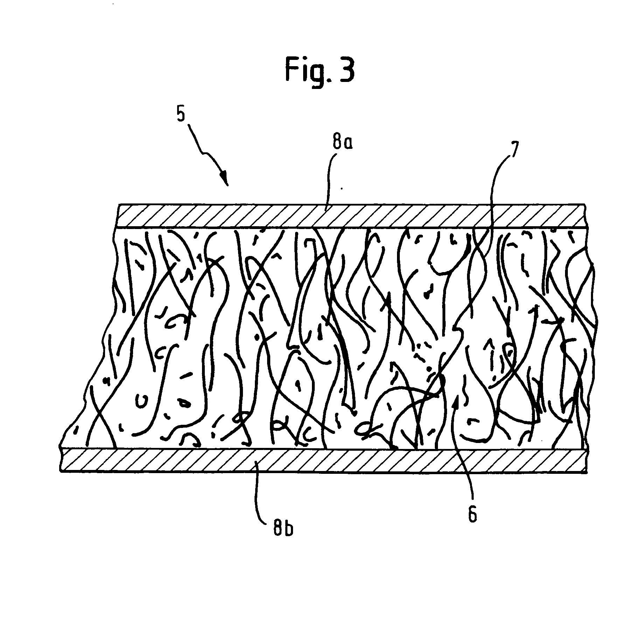

Fig. 3 zeigt in einer schematischen Querschnittszeichnung einen Metallkörper zur Wärmespeicherung 5. Zwischen zwei gegenüberliegenden Wänden 8a, 8b des Metallkörpers zur Wärmespeicherung 5 befindet sich ein Phasenübergangsmaterial 6. Zur Verbesserung des Wärmetransports befindet sich darüber hinaus zwischen den gegenüberliegenden Wänden 8a, 8b Mittel zum Wärmetransport, welche Graphit und/oder Kunststoffschaum umfassen, wobei das Mittel zum Wärmetransport 7 Kohlenstoffnanoröhren umfasst. Wird der Metallkörper zur Wärmespeicherung 5 abgekühlt, so beginnen die kälteren Schichten, d.h. die äußeren Schichten, zu erstarren. Durch die Kohlenstoffnanoröhren wird sichergestellt, dass die innen liegenden Schichten des Phasenübergangsmaterials ebenfalls schnell erstarren, da die dabei frei werdende Wärme durch die Kohlenstoffnanoröhren besonders gut nach außen geleitet werden können.

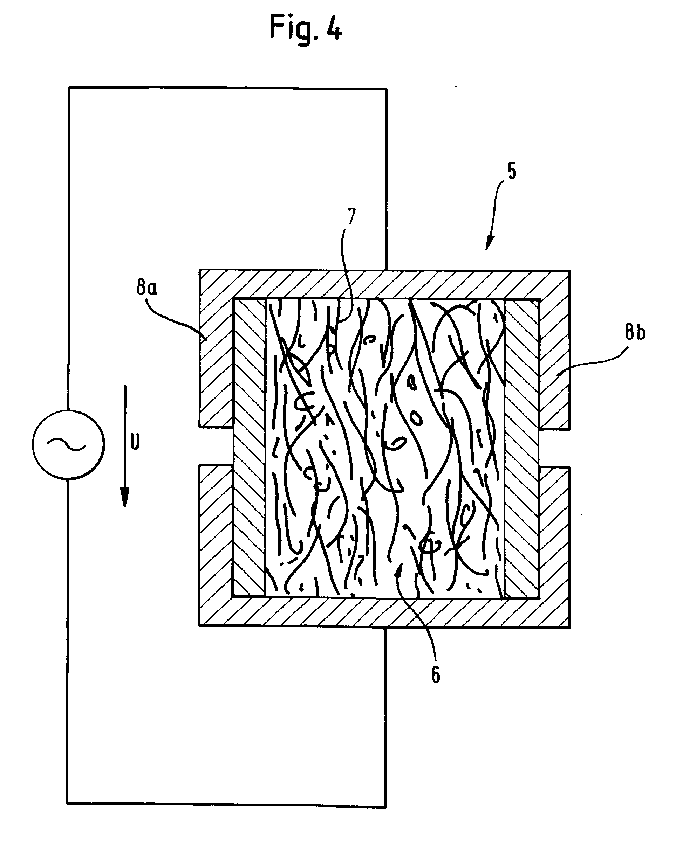

Fig. 4 zeigt eine schematische Querschnittszeichnung des Metallkörpers zur Wärmespeicherung 5. In dieser Ausführungsform sind zwei gegenüberliegende Wände 8a und 8b elektrisch isoliert. Zwischen den gegenüberliegenden Wänden 8a, 8b befindet sich ein Phasenübergangsmaterial 6 sowie ein Mittel zum Wärmetransport 7, welches Graphit umfasst, sowie Kohlenstoffnanoröhren. Dadurch, dass gegenüberliegenden Wände isoliert sind, kann eine elektrische Spannung angelegt werden und durch den Stromfluss durch das Graphit hindurch das Element aufgeheizt werden. Dadurch ist die Heizung und Wärmespeicherung in einem Element vereinigt. Durch diese zusätzliche Ausführung als Heizung wird ein ideales Element zur Wassererwärmung zur Verfügung gestellt, das Wärme sowohl erzeugen und zur schnellen Erwärmung größerer Mengen von Wasser speichern kann.

Das erfindungsgemäße Warmwassergerät bietet ökonomische, Platz sparende und effiziente Möglichkeiten der Wassererwärmung und Wärmespeicherung.

### BEZUGSZEICHENLISTE

- 1: Warmwassergerät
- 2: Wasserbehälter
- 3: Wasserzulauf
- 4: Wasserablauf
- 5: Metallkörper zur Wärmespeicherung
- 6: Phasenübergangsmaterial
- 7: Mittel zum Wärmetransport; Kohlenstoffnanoröhren
- 8a, 8b: gegenüberliegende Wände
- 9: Heizmittel

## Patentansprüche

1. Warmwassergerät (1), wenigstens umfassend einen Wasserbehälter (2), einen Wasserzulauf (3), einen Wasserablauf (4), sowie einen Metallkörper zur Wärmespeicherung (5), wobei dieser wenigstens ein Phasenübergangsmaterial (6) umfasst, wobei das Phasenübergangsmaterial (6) wenigstens ein Mittel zum Wärmetransport (7) umfasst,
**dadurch gekennzeichnet, dass** wenigstens zwei gegenüberliegende Wände (8a, 8b) des Metallkörpers zur Wärmespeicherung (5) elektrisch isoliert sind,
an welchen eine elektrische Spannung anlegbar ist, um den Metallkörper durch einen Stromfluss durch das Mittel zum Wärmetransport (7) aufzuheizen.

2. Warmwassergerät (1) nach Anspruch 1, **dadurch gekennzeichnet, dass** das Mittel zum Wärmetransport (7) Graphit und/oder Kunststoffschaum umfasst.

3. Warmwassergerät (1) nach Anspruch 1 oder 2, **dadurch gekennzeichnet, dass** das Mittel zum Wärmetransport (7) Kohlenstoffnanoröhren umfasst.

4. Warmwassergerät (1) nach einem der vorhergehenden Ansprüche, **dadurch gekennzeichnet, dass** das Phasenübergangsmaterial (6) einen Schmelzpunkt zwischen 60 °C und 100 °C aufweist.

5. Warmwassergerät (1) nach einem der vorhergehenden Ansprüche, **dadurch gekennzeichnet, dass** der Metallkörper zur Wärmespeicherung (5) stabförmig ausgebildet ist.

6. Warmwassergerät (1) nach einem der vorhergehenden Ansprüche, **dadurch gekennzeichnet, dass** das Warmwassergerät (1) ein Heizmittel (9) aufweist.

## Claims

1. Hot-water appliance (1), at least comprising a water container (2), a water inflow (3), a water outflow (4) and a metal body for storing heat (5), wherein this comprises at least one phase-change material (6), wherein the phase-change material (6) includes at least one means for transporting heat (7), **characterised in that** at least two opposite walls (8a, 8b) of the metal body are electrically insulated for storing heat (5), to which an electrical voltage can be applied in order to heat the metal body by means of a current flow through the means for transporting heat (7).

2. Hot-water appliance (1) according to claim 1, **characterised in that** the means for transporting heat (7) includes graphite and/or synthetic foam.

3. Hot-water appliance (1) according to claim 1 or 2, **characterised in that** the means for transporting heat (7) includes carbon nanotubes.

4. Hot-water appliance (1) according to one of the preceding claims, **characterised in that** the phase-change material (6) has a melting point between 60°C and 100 °C.

5. Hot-water appliance (1) according to one of the preceding claims, **characterised in that** the metal body for storing heat (5) is embodied in the manner of a rod.

6. Hot-water appliance (1) according to one of the preceding claims, **characterised in that** the hot-water appliance (1) has a heating means (9).

## Revendications

1. Chauffe-eau (1) comprenant au moins un réservoir d'eau (2), une entrée d'eau (3), une sortie d'eau (4) ainsi qu'un corps métallique destiné à l'accumulation de chaleur (5), celui-ci comprenant au moins une matière à transition de phases (6), la matière à transition de phases (6) comprenant au moins un moyen destiné au transport de chaleur (7), **caractérisé en ce qu'**au moins deux parois opposées (8a, 8b) du corps métallique sont électriquement isolées pour l'accumulation de chaleur (5), sur lesquelles une tension électrique est applicable pour échauffer le corps métallique au moyen d'un flux de courant à travers le moyen destiné au transport de chaleur (7).

2. Chauffe-eau (1) selon la revendication 1, **caractérisé en ce que** le moyen destiné au transport de chaleur (7) comprend du graphite et/ou de la mousse synthétique.

3. Chauffe-eau (1) selon la revendication 1 ou 2, **caractérisé en ce que** le moyen destiné au transport de chaleur (7) comprend des nànotubes de carbone.

4. Chauffe-eau (1) selon l'une quelconque des revendications précédentes, **caractérisé en ce que** la matière à transition de phases (6) présente un point de fusion compris entre 60° C et 100° C.

5. Chauffe-eau (1) selon l'une quelconque des revendications précédentes, **caractérisé en ce que** le corps métallique destiné à l'accumulation de chaleur (5) est réalisé en forme de barre.

6. Chauffe-eau (1) selon l'une quelconque des revendications précédentes, **caractérisé en ce que** le chauffe-eau (1) présente un moyen de chauffage (9).
